# EUROPEAN PATENT APPLICATION

(11) **EP 4 737 867 A1**
(43) Date of publication of application: **06.05.2026**
(21) Application number: 25208477.7
(22) Date of filing: 14.10.2025
(51) Int. Cl.: G01F 11/28, B65B 3/32

(54) **VOLUMETRIC METERING VALVE, PARTICULARLY FOR LIQUID, VISCOUS AND/OR PIECE-CONTAINING PRODUCTS**

(30) Priority: 29.10.2024 IT 202400024099
(71) Applicant: Zanichelli Meccanica S.p.A., 43123 Parma (IT)
(72) Inventor: DALLATURCA, Gianni, 43123 Parma (IT)
(74) Representative: Modiano, Micaela Nadia

(57) **Abstract**

A volumetric metering valve (1), particularly for liquid, viscous and/or piece-containing products, which comprises:
- a valve body (7), which defines inside it an intake duct (8) and a filling duct (9) which can be connected, respectively, to a storage tank (2) and to a container (3) to be filled at respective inlet (4) and filling (5) openings;
- a flow control element (11), which can move through the internal ducts of the valve body (7) between an intake position, in which the inlet opening (4) is fully open and the filling opening (5) is closed, and a filling position, in which the inlet opening (4) is closed and the filling opening (5) is fully open, passing through at least one throttling position which is intermediate with respect to the intake and filling positions, in which the inlet opening (4) is closed and the filling opening (5) is only partially open;
- a filling chamber (15) which communicates with the inside of the valve body (7);
- a pusher piston (16), which is accommodated in the filling chamber (15) so that it can slide between a loading position, in which the pusher piston (16) is fully extracted from the filling chamber (15) so as to allow the product to flood the filling chamber (15), and a discharge position, in which the pusher piston (16) is fully accommodated in the filling chamber (15) so as to convey the product from the filling chamber (15) to the container (3), passing through a draining position, which is intermediate between the loading and discharge positions.

## Description

The present invention relates to a volumetric metering valve, particularly for liquid, viscous and/or piece-containing products.

In the sector of filling machines, volumetric metering valves are known which are interposed between a container to be filled and a tank of product, typically above the container to be filled so that the filling occurs assisted by gravity.

In more detail, such conventional valves are fitted with internal elements, the function of which is to open and/or close the inlet and filling openings, respectively, of the tank and of the container, and at the same time to ensure the correct filling of the container, in terms of quantity, homogeneity and purity of the product.

However, such conventional valves are not devoid of drawbacks, among which is the fact that they are not capable of ensuring the repeatability of the filling.

In fact, the quantity of product between one filling and the next can vary in an uncontrolled manner owing to the viscous nature of the product itself or owing to a lack of homogeneity of the mixture between the liquid and solid components.

Another drawback of conventional valves consists in that, at each change of product, or in any case periodically, they require a manual cleaning operation which entails burdensome machine shutdowns.

In fact, owing to the residues present inside the valve, each filling can be potentially contaminated with the product residues of the previous filling.

In addition, such residues can build up at the seals of the internal elements, in so doing compromising their efficacy.

The aim of the present invention consists in providing a volumetric metering valve, particularly for liquid, viscous and/or piece-containing products, that is capable of overcoming the abovementioned drawbacks.

Within this aim, an object of the present invention consists in devising a method of operation of a volumetric metering valve, particularly for liquid, viscous and/or piece-containing products, that is capable of overcoming the abovementioned drawbacks.

Another object of the present invention consists in providing a volumetric metering valve that offers the widest guarantees of reliability in operation.

A further object of the present invention is to provide a volumetric metering valve that can be easily implemented with conventional technologies in the sector and which therefore offers contained manufacturing costs.

This aim and these and other objects which will become more apparent hereinafter are achieved by a volumetric metering valve, particularly for liquid, viscous and/or piece-containing products, according to claim 1, optionally provided with the characteristics of one or more of the dependent claims.

Further characteristics and advantages of the invention will become more apparent from the detailed description of a preferred, but not exclusive, embodiment of a volumetric metering valve, particularly for liquid, viscous and/or piece-containing products, which is illustrated by way of non-limiting example with the aid of the accompanying drawings wherein:

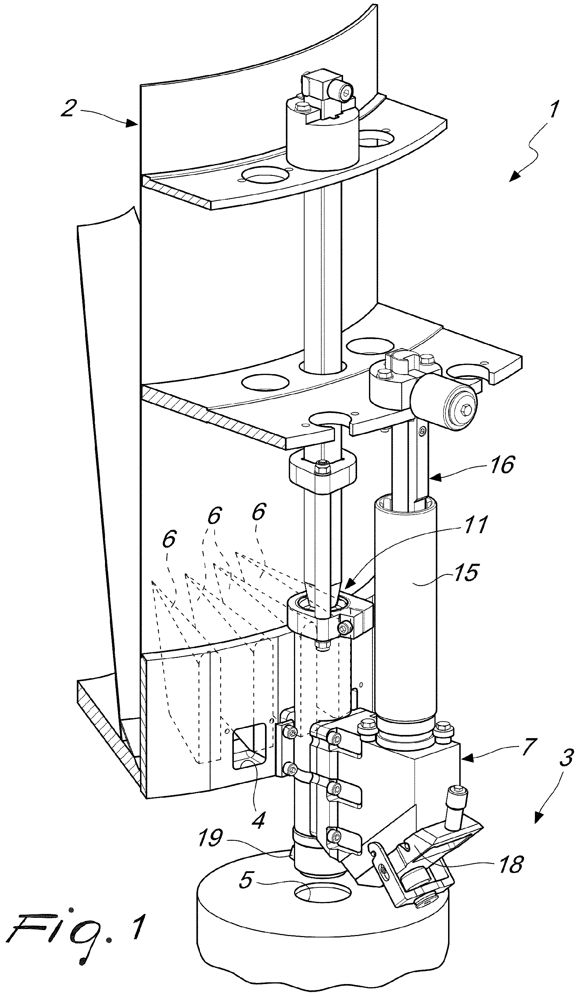

- Figure 1 is a perspective view of a volumetric filling valve according to the invention;

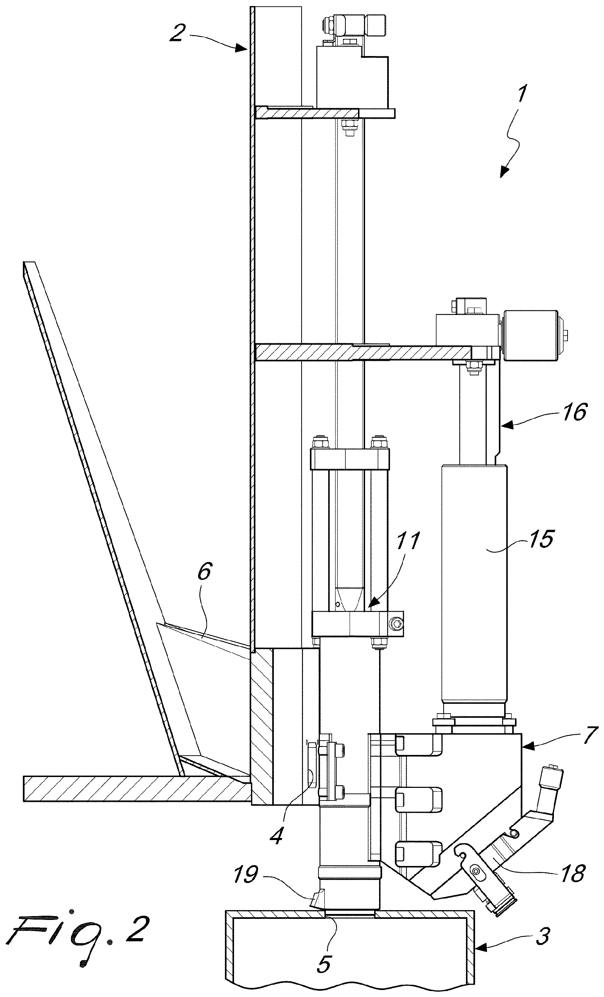

- Figure 2 is a partially cross-sectional side view of the volumetric filling valve shown in Figure 1;
- Figures 3 to 10 are eight cross-sectional side views showing, in sequence, the steps of the method of operation of the valve shown in the previous figures.

With reference to the figures, the volumetric metering valve, particularly for liquid, viscous and/or piece-containing products, is generally designated with the reference numeral 1 and is configured to be interposed between a storage tank 2 for a liquid, viscous and/or piece-containing product and a container 3 to be filled which is located below the storage tank 2 between an inlet opening 4 defined on the storage tank 2 and a filling opening 5 defined on the container 3.

In the embodiment proposed, the valve 1 described below is particularly adapted to filling machines of the rotary type.

Advantageously, inside the storage tank 2 there can be conveyor elements 6 proximate to the inlet opening 4 in order to facilitate the step of drawing and ensure a higher precision and repeatability of the solid/liquid mixture that makes up the final product.

According to the invention, the valve 1 comprises a valve body 7, which defines inside it an intake duct 8 and a filling duct 9 which can be connected, respectively, to the storage tank 2 and to the container 3 at the respective inlet 4 and filling 5 openings.

Advantageously, the ducts 8 and 9 are superimposed and communicating with each other by means of a siphon-equipped duct 10 located on the opposite side with respect to the inlet 4 and the filling 5 openings.

In more detail, the intake 8 and filling 9 ducts are substantially rectangular in cross-section in order to ensure a flow of the product in output from the valve 1 that is regular and uniform, and to ensure a higher precision of filling.

In the embodiment proposed, the intake duct 8 has, in the normal condition of use of the valve 1, an orientation which is inclined with respect to the horizontal in favor of the siphon-equipped duct 10, and the filling duct 9 has, in the normal condition of use of the valve 1, a vertical orientation.

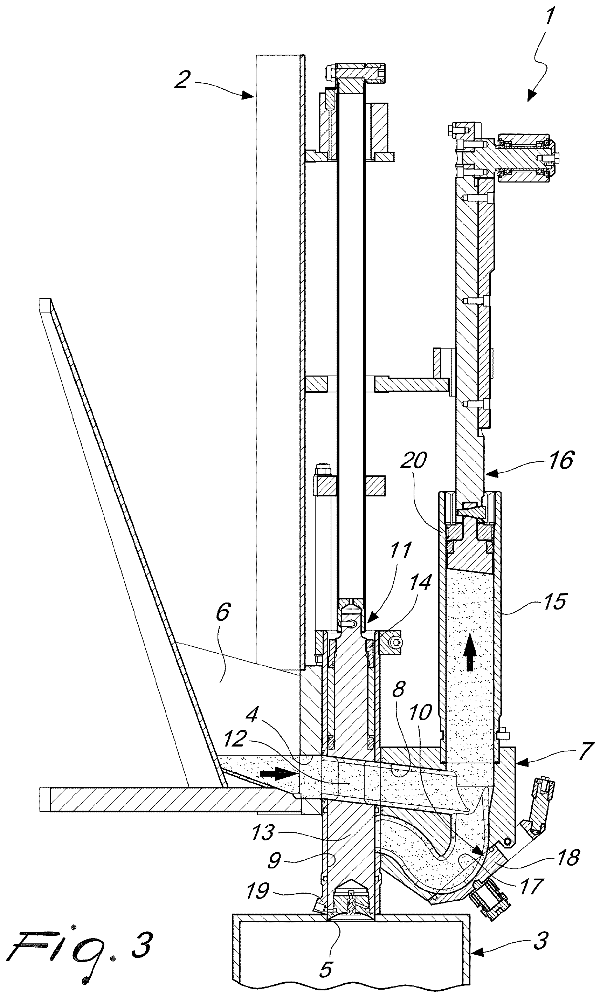

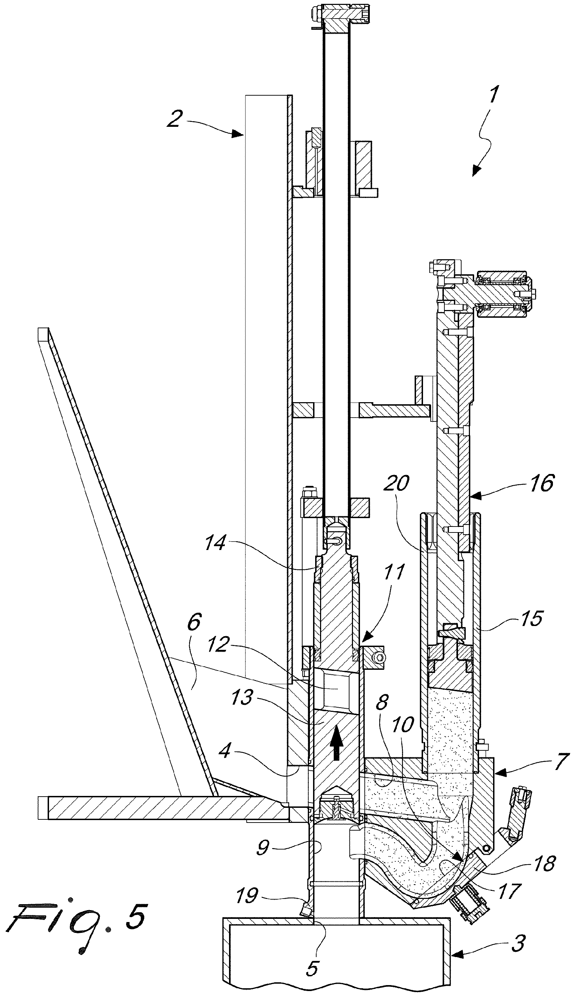

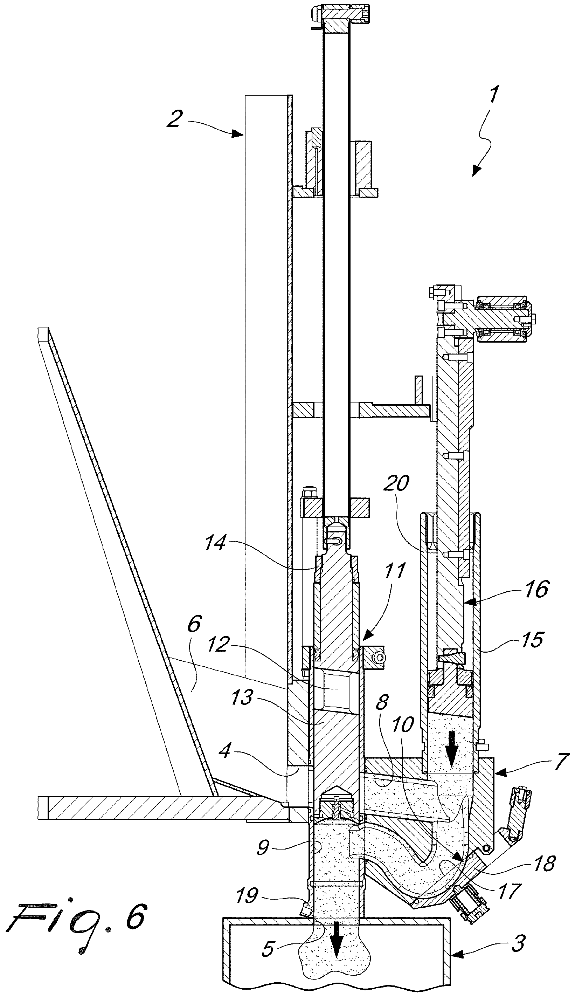

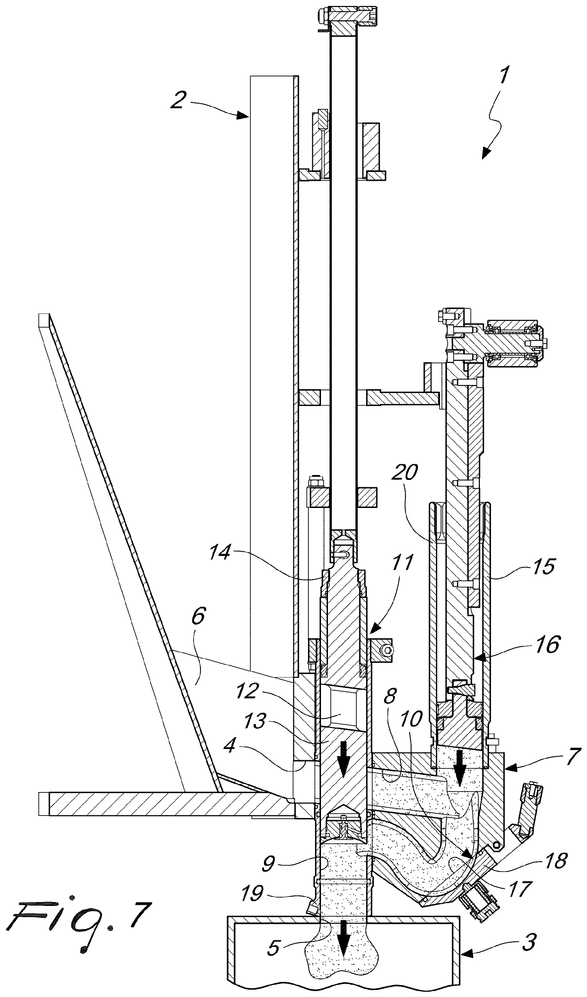

Together with the valve body 7, there is a flow control element 11 which can move transversely with respect to the intake duct 8 and along the filling duct 9 between an intake position, shown in Figure 3, in which the inlet opening 4 is fully open and the filling opening 5 is closed, and a filling position, shown in Figures 5 and 6, in which the inlet opening 4 is closed and the filling opening 5 is fully open, passing through at least one throttling position which is intermediate between the intake and filling positions, shown in Figure 7, and in which the inlet opening 4 is closed and the siphon-equipped duct 10 is partially open.

In more detail, the flow control element 11 is movable between the intake and filling positions along a vertical direction, in the normal condition of use of the valve 1, by means of a mechanical cam with a variable profile, and is guided along the internal walls of the valve body 7 and of the filling duct 9 transversely with respect to the intake duct 8.

The flow control element 11 comprises a radially narrowed portion 14, which is adapted to allow the passage of the product through the intake duct 8.

In this way, in the intake position the radially narrowed portion 12 is arranged at the inlet opening 4 and an end portion 13 of the flow control element 11 is arranged at the filling opening 5.

Conversely, in the filling position this end portion 13 is arranged at the inlet opening 5.

Finally, the flow control element 11 is provided with means of adjusting 14 the seal of the flow control element 11, which consist for example of a threaded ring, so as to ensure the correct interference between the seal and the flow control element 11, and compensate any wear of the seal that normally occurs with use of the valve 1.

Associated with the valve body 7 is a filling chamber 15, which communicates with the siphon-equipped duct 10 proximate to the intake duct 8.

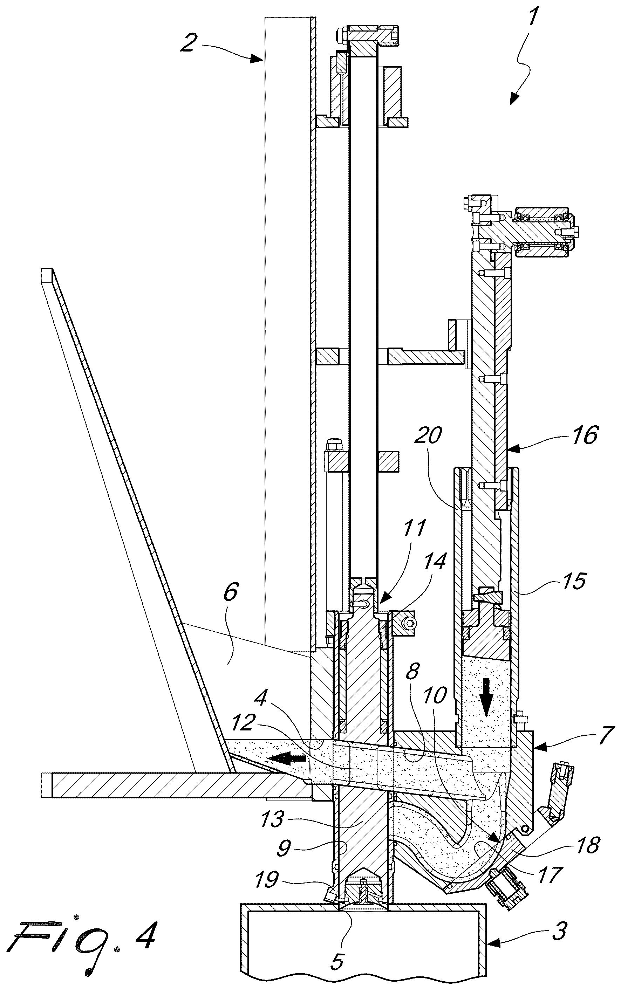

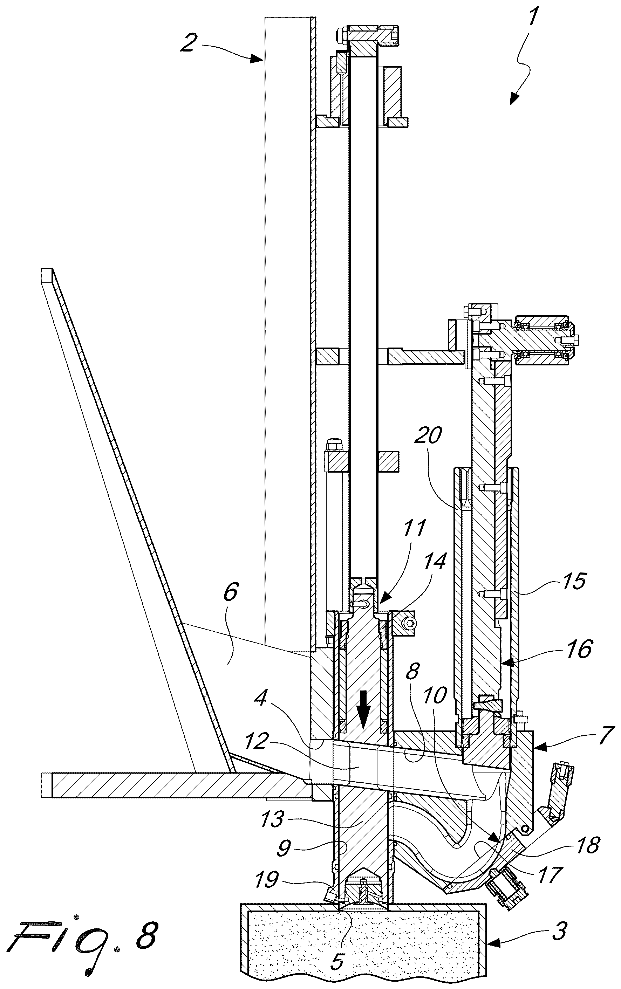

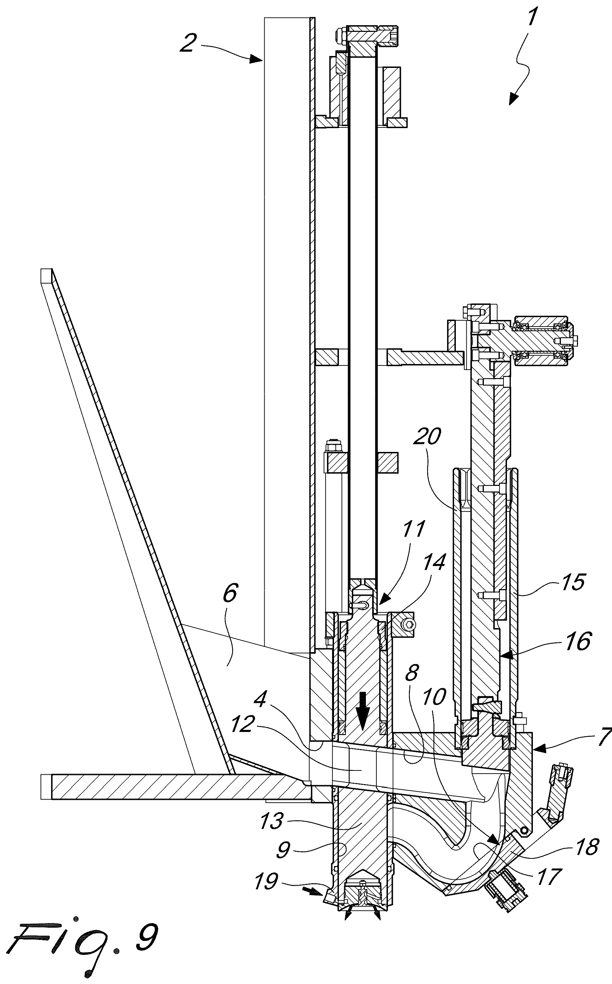

Together with the valve body 7, there is a pusher piston 16, which is accommodated in the filling chamber 15 so that it can slide between a loading position, shown in Figure 3, in which the pusher piston 16 is fully extracted from the filling chamber 15 so as to allow the product to flood the filling chamber 15, and a discharge position, shown in Figures 8 and 9, in which the pusher piston 16 is fully accommodated in the filling chamber 15 so as to convey the product from the filling chamber 15 to the siphon-equipped duct 10, passing through a draining position, shown in Figure 4, which is intermediate between the loading and discharge positions.

In more detail, the pusher piston 16 can move between the loading and discharge positions, along a vertical direction in the normal condition of use of the valve 1, by means of a mechanical cam with a variable profile.

In fact, the movement of the pusher piston 16 in the filling chamber 15 defines the desired quantity of the product to meter, in that a different quantity of product is drawn as its travel varies.

Advantageously, there is a lateral opening 17 of the siphon-equipped duct 10, located opposite the intake 8 and the filling 9 ducts, which is provided with a lid 18 which is automatically controlled by means of a cam and a pneumatic cylinder, and can be opened at the end of a washing cycle to completely empty the siphon-equipped duct 10 of the residues of washing liquids.

The following complete the valve 1 according to the present invention:
- means 19 for cleaning the flow control element 11, which are located at the base of the travel of the flow control element 11 at the filling opening 5, i.e. at the end of the filling step, and which during production are continuously active at each cycle of the valve, with an air/water mixture, for the cleaning and removal of product residues from the lower part of the flow control element 11 so as to ensure greater precision of filling while avoiding soiling the subsequent containers;
- first means of washing the flow control element 11 which are placed externally to the valve body 7 so as to allow an automatic washing of the seal of the flow control element 11 following an overtravel thereof beyond the intake position;
- second means of washing the pusher piston 16 which are placed externally to the valve body 7 so as to allow an automatic washing of the seal of the pusher piston 16 following an overtravel thereof beyond the loading position.

Conveniently, the filling chamber 15 comprises an end segment 20 for an additional travel of the pusher piston 16, which is arranged at the opposite end from the siphon-equipped duct 10 where the washing operations are performed.

The method of operation of the volumetric metering valve, according to the present invention, is described below.

With particular reference to Figure 3, there is a step of drawing the product, in which, with the flow control element 11 in the intake position, the pusher piston 16 translates from the discharge position to the loading position, rapidly, in so doing drawing the product from the storage tank 2 via the intake duct 8 for a quantity of product that is greater than the quantity to be transferred to the container 3, approximately double.

Subsequently, with particular reference to Figure 4, comes the step of draining, in which the pusher piston 16 translates from the loading position to the draining position, slowly, in so doing rejecting part of the product drawn into the storage tank 2 through the intake duct 10.

This ensures that there is a homogeneous mass of product, with equal ratio between solid and liquid, inside the filling chamber 15.

With particular reference to Figure 5, then comes the first switching of the valve 1, in which the flow control element 11 translates from the intake position to the filling position by simultaneously closing and opening, respectively, the inlet opening 4 and the filling opening 5 so as to allow the transfer of the product from the filling chamber 15 to the container 3.

During the translation the flow control element 11 pauses at the throttling position.

At this point, with particular reference to Figure 6, the method proceeds with the step of filling the container 3, in which the pusher piston 16 translates from the draining position to the discharge position, in so doing pushing the product into the container 3 through the siphon-equipped duct 10 and the filling duct 9.

At the same time as the filling step just described, with particular reference to Figure 7, then comes a second switching of the valve 1, in which the flow control element 11 translates from the intake position to the throttling position before the pusher piston 16 has transferred the full amount of product into the container 3, so as to ensure an optimal restoration of the product inside the siphon-equipped duct 10 and therefore a higher precision of filling, and the pusher piston 16 translates continuously and without interruptions until the discharge position is reached.

Subsequently, with particular reference to Figure 8, comes a third switching of the valve 1, in which the flow control element 11 translates from the throttling position to the intake position, by simultaneously closing and opening, respectively, the filling opening 4 and the inlet opening 5 for the closing cycle.

Conveniently, such third switching is performed after the complete transfer of the product from the valve body 7 to the container 3.

Furthermore, with particular reference to Figure 9, there can be a step of cleaning the flow control element 11, performed by means of the cleaning means 19, in which a mixture of air and water is made to enter at the base of the travel of the flow control element 11 at the filling opening 5, i.e. at the end of the filling step, actively and continuously at each cycle of the valve 1 during production, for the cleaning and removal of product residues from the lower part of the flow control element 11, when the container 3 is still underneath the filling head. This ensures a greater precision of filling while avoiding soiling subsequent containers by virtue of a thorough cleaning of the bottom surface of the flow control element 11.

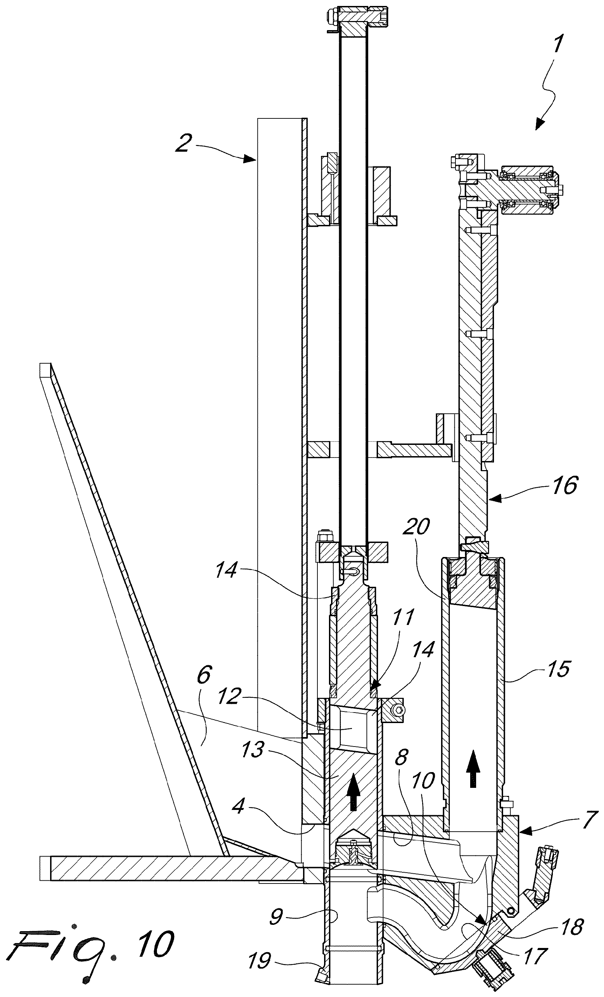

Finally, with particular reference to Figure 10, there is a step of washing the flow control element 11 and the pusher piston 16 which is performed, respectively, by means of the first and the second means of washing, and in which the flow control element 11 and the pusher piston 16 are made to translate with an overtravel outside of the valve body 7 so that the respective seals are positioned at the first and the second means of washing, without the operator needing to intervene to dismount the components.

In more detail, the seal of the flow control element 11 is brought outside its natural seat in order to be able to wash it with the aid of external spray nozzles which define the first means of washing, while the seal of the piston is located in an end segment of the filling chamber 15 where it can be bathed by the washing solution originating from the second means of washing.

In practice it has been found that the volumetric filling valve according to the present invention achieves the intended aim and objects, in that it makes it possible to operate with a broader series of products with respect to the prior art, with greater precision and superior cleaning.

The size and the rectangular cross-section of the intake and filling ducts, the diameter of the pusher piston, the diameter of the flow control element and the geometry of the product passages, all make this valve particularly adapted to the dosage of viscous products containing pieces which may be small or large in size, which are common in the pet food industry (chunks in jelly, or chunks in gravy).

The volumetric filling valve thus conceived is susceptible of numerous modifications and variations, all of which are within the scope of the appended claims.

Moreover, all the details may be substituted by other, technically equivalent elements.

In practice the materials employed, provided they are compatible with the specific use, and the contingent dimensions and shapes, may be any according to requirements.

The disclosures in Italian Patent Application No. 102024000024099 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A volumetric metering valve (1), particularly for liquid, viscous and/or piece-containing products, which is configured to be interposed between a storage tank (2) for a liquid, viscous and/or piece-containing product and a container (3) to be filled which is located below said storage tank (2) between an inlet opening (4) defined on said storage tank (2) and a filling opening (5) defined on said container (3); **characterized in that** it comprises:
- a valve body (7), which defines inside it an intake duct (8) and a filling duct (9) which can be connected, respectively, to said storage tank (2) and to said container (3) at said inlet (4) and said filling (5) openings; said intake and filling ducts (8, 9) being superimposed and communicating with each other by means of a siphon-equipped duct (10) located on the opposite side with respect to said inlet (4) and said filling (5) openings;
- a flow control element (11), which is configured to move transversely with respect to said intake duct (8) and along said filling duct (9) between an intake position, in which said inlet opening (4) is fully open and said filling opening (5) is closed, and a filling position, in which said inlet opening (4) is closed and said filling opening (5) is fully open, passing through at least one throttling position which is intermediate between said intake and filling positions, in which said inlet opening (4) is closed and said siphon-equipped duct (10) is partially open;
- a filling chamber (15), which communicates with said siphon-equipped duct (10) proximate to said intake duct (8);
- a pusher piston (16), which is accommodated in said filling chamber (15) so that it can slide between a loading position, in which said pusher piston (16) is fully extracted from said filling chamber (15) so as to allow said product to flood said filling chamber (15), and a discharge position, in which said pusher piston (16) is fully accommodated in said filling chamber (15) so as to convey said product from said filling chamber (15) to said siphon-equipped duct (10), passing through a draining position which is intermediate between said loading and discharge positions.

2. The valve (1) according to claim 1, **characterized in that** said intake (8) and said filling (9) ducts are substantially rectangular in transverse cross-section.

3. The valve (1) according to claim 1, **characterized in that** said intake duct (8) has, in the normal condition of use of said valve (1), an orientation which is inclined with respect to the horizontal in favor of said siphon-equipped duct (10).

4. The valve (1) according to claim 1, **characterized in that** said filling duct (9) has, in the normal condition of use of said valve (1), a vertical orientation.

5. The valve (1) according to claim 1, **characterized in that** said flow control element (11) is movable between said intake and filling positions by means of a mechanical cam with a variable profile.

6. The valve (1) according to one or more of the preceding claims, **characterized in that** said flow control element (11) is guided along the internal walls of said valve body (7) and of said filling duct (9) transversely with respect to said intake duct (8) and comprises a radially narrowed portion (12), which is adapted to allow the passage of said product through said intake duct (8); in said intake position said radially narrowed portion (12) being located at said inlet opening (4) and an end portion (13) of the flow control element (11) being located at said filling opening (5); in said filling position said end portion (13) being located at said inlet opening (4).

7. The valve (1) according to one or more of the preceding claims, **characterized in that** said pusher piston (16) is movable between said loading and discharge positions by means of a mechanical cam with a variable profile.

8. The valve (1) according to one or more of the preceding claims, **characterized in that** it comprises a lateral opening (17) of said siphon-equipped duct (10), located opposite said intake (8) and said filling (9) ducts and provided with a lid (18) which can be opened at the end of a washing cycle to completely empty said siphon-equipped duct (10) of the residues of washing liquids.

9. The valve (1) according to one or more of the preceding claims, **characterized in that** it comprises means (19) for cleaning the flow control element (11), which are located at the base of the travel of said flow control element (11) at said filling opening (5) for the cleaning and removal of product residues from the lower part of said flow control element (11) so as to ensure greater precision of filling while avoiding soiling subsequent containers.

10. The valve (1) according to one or more of the preceding claims, **characterized in that** it comprises first means of washing said flow control element (11) which are placed externally to said valve body (7) so as to allow an automatic washing of the seal of said flow control element (11) following an overtravel thereof beyond said intake position.

11. The valve (1) according to one or more of the preceding claims, **characterized in that** it comprises second means of washing said pusher piston (16) which are placed externally to said valve body (7) so as to allow an automatic washing of the seal of said pusher piston (16) following an overtravel thereof beyond said loading position.

12. The valve (1) according to one or more of the preceding claims, **characterized in that** it comprises means of adjusting the seal of said flow control element (11) so as to ensure the correct interference between the seal and said flow control element (11).

13. A method of operation of a volumetric metering valve (1), according to one or more of the preceding claims, **characterized in that** it comprises the following steps:
- drawing said product, in which, with said flow control element (11) in said intake position, said pusher piston (16) translates from said discharge position to said loading position, in so doing drawing said product from said storage tank (2) via said intake duct (8) for a quantity of said product greater than that to be transferred to said container (3);
- draining, in which said pusher piston (16) translates from said loading position to said draining position, in so doing rejecting part of said product drawn into said storage tank (2) through said intake duct (8);
- first switching of said valve (1), in which said flow control element (11) translates from said intake position to said filling position by simultaneously closing and opening, respectively, said inlet opening (4) and said filling opening (5) so as to allow the transfer of said product from said filling chamber (15) to said container (3); during said translation said flow control element (11) pauses at said throttling position;
- filling said container (3), in which said pusher piston (16) translates from said draining position to said discharge position, in so doing pushing said product into said container (3) through said siphon-equipped duct (10) and said filling duct (9);
- second switching of said valve (1), performed during said filling step; in said second switching: said flow control element (11) translating from said intake position to said throttling position before said pusher piston (16) has transferred the full amount of said product into said container (3), and said pusher piston (16) translating continuously and without interruptions until said discharge position is reached;
- third switching of said valve (1), in which said flow control element (11) translates from said throttling position to said intake position, in so doing closing and opening, simultaneously and respectively, said filling opening (5) and said inlet opening (4) to close the cycle; said third switching being performed after the complete transfer of said product from said valve body (7) to said container (3).

14. The method according to claim 13, **characterized in that** it comprises a step of cleaning said flow control element (11) which is performed by means of said means (19) for cleaning and in which a mixture of air and water is made to enter at the base of the travel of said flow control element (11) at said filling opening (5) for the cleaning and removal of product residues from the lower part of said flow control element (11) so as to ensure greater precision of filling while avoiding soiling subsequent containers by virtue of a thorough cleaning of the bottom surface of said flow control element (11).

15. The method according to one or more of claims 13 and 14, **characterized in that** it comprises a step of washing said flow control element (11) and said pusher piston (16) which is performed, respectively, by means of said first and said second means of washing, and in which said flow control element (11) and said pusher piston (16) are made to translate with an overtravel outside of said valve body (7) so that the respective seals are positioned at said first and said second means of washing.
